# NEUE EUROPÄISCHE PATENTSCHRIFT

(11) **EP 3 501 255 B2**
(45) Veröffentlichungstag und Bekanntmachung des Hinweises auf die Entscheidung über den Einspruch: **24.01.2024**
(45) Hinweis auf die Patenterteilung: 24.03.2021
(21) Anmeldenummer: 18200328.5
(22) Anmeldetag: 15.10.2018
(51) Int. Cl.: A01D 41/127

(54) **LANDWIRTSCHAFTLICHE ARBEITSMASCHINE ZUR ABARBEITUNG EINES LANDWIRTSCHAFTLICHEN ARBEITSPROZESSES**
AGRICULTURAL WORKING MACHINE FOR EXECUTING AN AGRICULTURAL WORK PROCESS
MACHINE DE TRAVAIL AGRICOLE DESTINÉ À TRAITER UN PROCESSUS DE TRAVAIL AGRICOLE

(30) Priorität: 19.12.2017 DE 102017130435
(43) Veröffentlichungstag der Anmeldung: 26.06.2019
(73) Patentinhaber: CLAAS Selbstfahrende Erntemaschinen GmbH, 33428 Harsewinkel (DE)
(72) Erfinder: Rademacher, Thomas, 55425 Waldalgesheim (DE)
(74) Vertreter: CLAAS Gruppe

(56) Entgegenhaltungen:
- EP-A1- 2 322 028
- EP-A1- 2 987 396
- EP-A1- 3 178 307
- EP-A2- 2 042 019
- EP-A2- 2 325 611
- EP-B1- 2 220 926
- DE-A1- 10 147 733
- DE-A1-102015 122 269
- J. EDER, PRODUKTNEUHEIT SCHWARZ FÜR ALLE: DIE DETAILS ZU DEN NEUEN AGCO- MÄHDRESCHERN IDEAL, 9 June 2017 (2017-06-09) & Video URL:https://www.youtube.com/watch?v=SZJ8IC V4IUA

## Beschreibung

Die vorliegende Erfindung betrifft eine landwirtschaftliche Arbeitsmaschine zur Abarbeitung eines landwirtschaftlichen Arbeitsprozesses gemäß dem Oberbegriff des Anspruches 1 sowie ein Verfahren zum Betreiben einer landwirtschaftlichen Arbeitsmaschine gemäß dem Oberbegriff des Anspruches 13.

Um die Arbeitsweise einer landwirtschaftlichen Arbeitsmaschine effizient zu gestalten, ist es bekannt, ein so genanntes Fahrerassistenzsystem vorzusehen, welches zu einer automatisierten Einstellung und Überwachung von Einstellparametern und sensorisch erfassbaren Qualitätskriterien der Arbeitsorgane der landwirtschaftlichen Arbeitsmaschine eingerichtet ist. Dabei wird durch eine bedienerseitige Vorgabe einer Prozessstrategie, die auf die Erreichung und Einhaltung zumindest eines Qualitätskriteriums gerichtet ist, eine aufeinander abgestimmte Ansteuerung der Arbeitsorgane vorgenommen. Somit sollen die Wechselwirkungen zwischen den Arbeitsorganen, die aus einer Änderung wenigstens eines Einstellparameters zumindest eines Arbeitsorgans resultieren, in der Weise berücksichtigt werden, dass im Ergebnis die Arbeitsmaschine ein optimiertes Arbeitsergebnis für die vorgegebene Prozessstrategie liefert. Die Vorgabe der Prozessstrategie erfolgt durch eine Eingabe einer Bedienperson mittels einer grafischen Benutzerschnittstelle, welche mit dem Fahrerassistenzsystem verbunden ist. Die grafische Benutzerschnittstelle ermöglicht es der Bedienperson einen angestrebten Erfüllungsgrad eines Qualitätskriteriums zu variieren. D.h., die Bedienperson erhält die Möglichkeit, die Prozessstrategie in der Weise zu beeinflussen, dass das Erreichen eines spezifischen Qualitätskriteriums stärker gewichtet wird, wodurch sich jedoch zugleich die Gewichtung eines hierzu konträren Qualitätskriteriums verändert.

Eine solche landwirtschaftliche Arbeitsmaschine ist aus der EP 3 178 307 A1 vorbekannt. Die EP 3 178 307 A1 offenbart ein Fahrerassistenzsystem für eine landwirtschaftliche Arbeitsmaschine mit einer grafischen Benutzerschnittstelle, welche die Veränderung der Gewichtung eines spezifischen Qualitätskriteriums ermöglicht und damit einhergehend die Verlagerung der Gewichtung zwischen zwei konträren Qualitätskriterien visualisiert. So führt beispielsweise die Verlagerung der Gewichtung zwischen den konträren Qualitätskriterien "Bruchkorn" und "Ausdrusch" in Richtung "Ausdrusch" dazu, dass die Einstellparameter des für den Ausdrusch vorgesehenen Arbeitsorgans entsprechend zur Erzielung eines höheren Ausdruschs an Korn angepasst werden, damit einhergehend natürlich auch der Bruchkornanteil ansteigt. Die Visualisierung gemäß der EP 3 178 307 A1 lässt die Bedienperson jedoch darüber im Unklaren, wie sich eine vorgenommene Änderung auf weitere Qualitätskriterien auswirken könnte.

Der vorliegenden Erfindung liegt daher die Aufgabe zugrunde, ein Fahrerassistenzsystem einer landwirtschaftlichen Arbeitsmaschine weiterzubilden, welches sich durch eine verbesserte Informationsaufbereitung auszeichnet.

Diese Aufgabe wird durch eine landwirtschaftliche Arbeitsmaschine gemäß den Merkmalen des Anspruches 1 gelöst.

Vorteilhafte Weiterbildungen sind Gegenstand der Unteransprüche.

Gemäß dem Anspruch 1 wird eine landwirtschaftliche Arbeitsmaschine zur Abarbeitung eines landwirtschaftlichen Arbeitsprozesses vorgeschlagen, mit mehreren Arbeitsorganen und mit einem Fahrerassistenzsystem zur Ansteuerung der Arbeitsorgane zur Erreichung mindestens eines sensorisch erfassbaren Qualitätskriteriums des Arbeitsprozesses, wobei die landwirtschaftliche Arbeitsmaschine eine mit einer Anzeigeneinheit versehene Steuer- und Regeleinrichtung umfasst, welche durch ein sogenanntes Bussystem in an sich bekannter Weise mit einer Vielzahl von unterschiedlichen Sensorsystemen kommuniziert und die Sensorsysteme eingerichtet sind die Qualitätskriterien zu bestimmen, wobei die Qualitätskriterien "Durchsatz", "Ausdrusch", "Bruchkornanteil", "Sauberkeit" und "Strohqualität" sind. Durch das Fahrerassistenzsystem sind spezifische Einstellparameter zur Ansteuerung der Arbeitsorgane voreinstellbar, um das mindestens eine Qualitätskriterium des Arbeitsprozesses zu erfüllen. Das Fahrerassistenzsystem umfasst hierzu einen Speicher zum Hinterlegen von Daten und eine Recheneinrichtung zur Verarbeitung der in dem Speicher hinterlegten Daten. Weiterhin weist das Fahrerassistenzsystem eine grafische Benutzerschnittstelle auf, durch die ein jeweiliger Erfüllungsgrad des mindestens einen Qualitätskriteriums veränderbar ist. Mit dem Erfüllungsgrad eines Qualitätskriteriums ist die Vorgabe zumindest eines Einstellparameters durch das Fahrerassistenzsystem bezeichnet, um dasjenige Arbeitsorgans in der Weise anzusteuern, dass der angestrebte Erfüllungsgrad des Qualitätskriteriums erreichbar wird. Für eine verbesserte Informationsaufbereitung ist vorgesehen, dass aufgrund einer Änderung des Erfüllungsgrades des zumindest einen Qualitätskriteriums erwartbare Auswirkungen auf andere Qualitätskriterien durch das Fahrerassistenzsystem bestimmbar sind und dass mittels der grafischen Benutzerschnittstelle mit der Änderung des Erfüllungsgrades dasjenige Qualitätskriterium oder diejenigen Qualitätskriterien visuell hervorhebbar ist oder sind, für welches oder welche aufgrund der Änderung des Erfüllungsgrades eine Verschlechterung erwartbar ist. Der Erfindung liegt der Gedanke zugrunde, dass mittels der grafischen Benutzerschnittstelle bei Vornahme einer Änderung des Erfüllungsgrades eines Qualitätskriteriums dessen erwartbare Auswirkungen auf andere Qualitätskriterien visualisiert werden. Durch die Recheneinrichtung ist bestimmbar, welche weiteren Qualitätskriterien sich aufgrund der Änderung des Erfüllungsgrades des einen Qualitätskriteriums verschlechtern können. Der Bedienperson wird auf diese Weise unmittelbar die mögliche negative Konsequenz seiner Einstellungsänderung angezeigt, damit dieser eine entsprechende Abwägung vornehmen kann, ob die vorgenommene Änderung übernommen werden soll.

Hierzu können die Vorgabe und die Änderung des jeweiligen Erfüllungsgrades mittels zumindest eines virtuellen Bedienelementes der grafischen Benutzerschnittstelle visualisierbar und veränderbar sein. Hierdurch wird eine einfache Handhabung des Fahrerassistenzsystems erreicht, durch welche die Bedienperson ohne eine nennenswerte Ablenkung vom Arbeitsprozess die Vorgabe bzw. Änderung vornehmen kann.

Insbesondere kann die jeweils aktuell vorgenommene Veränderung des Erfüllungsgrades eines Qualitätskriteriums gegenüber einer vorherigen Veränderung des Erfüllungsgrades eines anderen Qualitätskriteriums priorisierbar sein. Auf diese Weise kann die Bedienperson eine vorangehende Veränderung eines Erfüllungsgrades eines Qualitätskriteriums übersteuern und kann zugleich visuell davon in Kenntnis gesetzt werden, dass sich das vorangehend geänderte Qualitätskriterium aufgrund eines Zielkonfliktes mit den daraus resultierenden Einstellparametern nicht mehr in der gewählten Größenordnung erreichen lässt.

Alternativ kann die jeweils aktuell vorgenommene Veränderung des Erfüllungsgrades eines Qualitätskriteriums gegenüber einer vorherigen Veränderung des Erfüllungsgrades eines anderen Qualitätskriteriums gleichwertig berücksichtigbar sein. Das Fahrerassistenzsystem bestimmt aufgrund der vorgenommenen Änderungen der Erfüllungsgrade der beiden Qualitätskriterien die Auswirkungen aufeinander und visualisiert die sich daraus ergebende, erwartbare Verschlechterung gegenüber der mit der Einstellung der Erfüllungsgrade angestrebten Zielstellung. Es wird seitens des Fahrerassistenzsystems ein Kompromiss für die Einstellparameter bestimmt, die wegen der Änderungen der Erfüllungsgrade der beiden Qualitätskriterien durch das Fahrerassistenzsystem angepasst werden müssen.

Gemäß einer bevorzugten Weiterbildung kann das Fahrerassistenzsystem dazu eingerichtet sein, die erwartbare Änderung des Erfüllungsgrades des Qualitätskriteriums oder der Qualitätskriterien unabhängig von einer Durchführung der Änderung des Erfüllungsgrades des zumindest einen Qualitätskriteriums zu bestimmen. Das Fahrerassistenzsystem gibt dadurch der Bedienperson vor einem wirksam werden der vorgenommenen Änderung die Möglichkeit, durch die gezielte visuelle Hervorhebung des oder der sich verschlechternden Qualitätskriterien kann sich die Bedienperson einfach und schnell über die Auswirkungen informieren und gegebenenfalls abändern, wenn das erwartbare Resultat zu stark von dem angestrebten Ergebnis abweicht.

Hierzu kann die erwartbare Änderung des Erfüllungsgrades des Qualitätskriteriums oder der Qualitätskriterien auf Grundlage von in dem Fahrerassistenzsystem hinterlegten Informationen bestimmbar sein. Das Fahrerassistenzsystem kann hierzu auf in dem Speicher hinterlegte Daten, wie Expertenwissen, Kennlinien oder Kennlinienfelder, sowie sensorisch generierte interne Informationen, die Einstellparameter der Arbeitsorgane als auch des verarbeiteten Erntegutes umfassen sowie externe Informationen zugreifen, um die jeweilige Auswirkung, die eine Änderung eines Erfüllungsgrades eines Qualitätskriteriums als erwartbare Folge nach sich ziehen kann, zu bestimmen.

Bevorzugt kann das virtuelle Bedienelement mittels der grafischen Benutzerschnittstellte als virtueller Schiebesteller oder virtueller Drehsteller darstellbar sein. Zur Verstellung ist die grafische Benutzerschnittstelle vorzugsweise als berührungssensitiver Bildschirm ausgeführt, der das Verstellen des virtuellen Bedienelementes durch eine Berührung und Bewegung des Schiebestellers oder Drehstellers erlaubt.

In einer vorteilhaften Weiterbildung kann ein durch das Fahrerassistenzsystem bestimmter erwartbarer Grad der Veränderung des oder der sich verschlechternden Qualitätskriterien durch eine der Verstellrichtung des betätigten virtuellen Bedienelementes gegenläufige Visualisierung darstellbar sein.

Bevorzugt kann die Visualisierung des erwartbaren Grades der Veränderung des oder der sich verschlechternden Qualitätskriterien mittels der Darstellung einer Säule oder eines Kreissektors erfolgen, die dem jeweiligen virtuellen Bedienelement des oder der sich verschlechternden Qualitätskriterien hinterlegt darstellbar ist oder sind. Durch diese Art der Visualisierung, die der Darstellung eines Diagramms entsprechen kann, kann die Bedienperson quasi auf einen Blick abschätzen, welche qualitativen und quantitativen Auswirkungen aufgrund einer Veränderung des Erfüllungsgrades zumindest einen Qualitätskriteriums auf andere Qualitätskriterien zu erwarten sind.

Erfindungsgemäß sind die Qualitätskriterien "Bruchkornanteil", "Ausdrusch", "Sauberkeit", "Strohqualität" und "Durchsatz", wobei die Qualitätskriterien "Bruchkornanteil", "Ausdrusch", "Sauberkeit", "Strohqualität" jeweils dem konträren Qualitätskriterium "Durchsatz" gegenübergestellt durch die grafischen Benutzerschnittstelle darstellbar sind. Diese Qualitätskriterien stellen übergeordnete Ziele dar, deren Erreichung durch die verschiedenen Arbeitsorgane der Arbeitsmaschine in vielfältiger und wechselseitiger Weise beeinflusst wird. Mit dieser vereinfachten Darstellung kann die Bedienperson eine grundsätzliche Übersicht darüber erhalten, wie sich Änderungen von Einstellparametern einzelner Arbeitsorgane aufgrund ihrer individuellen Wechselwirkungen aufeinander auswirken, ohne eine Änderung der Parametrisierung des jeweiligen Arbeitsorgans und deren Auswirkungen deren Arbeitsergebnis prüfen zu müssen.

Gemäß einer Weiterbildung können die virtuellen Bedienelemente des jeweiligen Qualitätskriteriums bei einer Inbetriebnahme des Fahrerassistenzsystems als initiale Ausgangsstellung eine Mittelstellung zwischen den konträren Qualitätskriterien aufweisen. Diese initiale Ausgangsstellung stellt eine ausgeglichene Berücksichtigung der konträren Qualitätskriterien hinsichtlich ihres unter den gegebenen Betriebsbedingungen erreichbaren Erfüllungsgrades dar. Hiervon ausgehend kann die Bedienperson zumindest eines der virtuellen Bedienelemente entsprechend des von ihr angestrebten Erfüllungsgrades eines Qualitätskriteriums verstellen und wird über die zu erwartenden Verschlechterung eines oder mehrere anderer Qualitätskriterien informiert.

Insbesondere kann die Arbeitsmaschine als Mähdrescher ausgeführt sein. Insbesondere Mähdrescher sind aufgrund der Vielzahl von verschiedenen Arbeitsorganen und der unterschiedlichen durchzuführenden Verfahrensschritte zum Ernten und Verarbeiten von Erntegut besonders geeignet, durch ein Fahrerassistenzsystem angesteuert zu werden.

Weiterhin wird die eingangs gestellte Aufgabe durch ein Verfahren zum Betreiben einer landwirtschaftlichen Arbeitsmaschine gemäß dem Verfahrensanspruch 13 gelöst.

Demnach wird ein Verfahren zum Betreiben einer landwirtschaftliche Arbeitsmaschine zur Abarbeitung eines landwirtschaftlichen Arbeitsprozesses vorgeschlagen, mit mehreren Arbeitsorganen und mit einem Fahrerassistenzsystem zur Ansteuerung der Arbeitsorgane zur Erreichung mindestens eines sensorisch erfassbaren Qualitätskriteriums des Arbeitsprozesses, wobei die landwirtschaftliche Arbeitsmaschine eine mit einer Anzeigeneinheit versehene Steuer- und Regeleinrichtung umfasst, welche durch ein sogenanntes Bussystem in an sich bekannter Weise mit einer Vielzahl von unterschiedlichen Sensorsystemen kommuniziert und die Sensorsysteme eingerichtet sind die Qualitätskriterien zu bestimmen, wobei die Qualitätskriterien "Durchsatz", "Ausdrusch", "Bruchkornanteil", "Sauberkeit" und "Strohqualität" sind und wobei durch das Fahrerassistenzsystem spezifische Einstellparameter zur Ansteuerung der Arbeitsorgane voreingestellt werden, um das mindestens eine Qualitätskriterium des Arbeitsprozesses zu erfüllen, wobei das Fahrerassistenzsystem einen Speicher zum Hinterlegen von Daten und eine Recheneinrichtung zur Verarbeitung der in dem Speicher hinterlegten Daten umfasst, wobei das Fahrerassistenzsystem eine grafische Benutzerschnittstelle aufweist, durch die ein jeweiliger Erfüllungsgrad des mindestens einen Qualitätskriterium durch eine Eingabe verändert wird, wobei aufgrund einer Änderung des Erfüllungsgrades des zumindest einen Qualitätskriteriums erwartbare Auswirkungen auf andere Qualitätskriterien durch das Fahrerassistenzsystem bestimmt werden und dass mittels der grafischen Benutzerschnittstelle mit der Änderung des Erfüllungsgrades dasjenige Qualitätskriterium oder diejenigen Qualitätskriterien visuell hervorgehoben wird oder werden, für welches oder welche aufgrund der Änderung des Erfüllungsgrades eine Verschlechterung erwartet wird.

Die vorliegende Erfindung wird nachstehend anhand eines in den Zeichnungen dargestellten Ausführungsbeispieles näher erläutert.

Es zeigen:
- Fig. 1: eine schematische Darstellung einer als Mähdrescher ausgeführten landwirtschaftlichen Arbeitsmaschine;
- Fig. 2: eine schematische Darstellung eines Fahrerassistenzsystems der Arbeitsmaschine;
- Fig. 3: eine Ansicht einer Menüoberfläche einer Anzeigeeinheit des Fahrerassistenzsystems;
- Fig. 4: eine Ansicht der Menüoberfläche der Anzeigeeinheit gemäß Fig. 3;
- Fig. 5: eine weitere Ansicht der Menüoberfläche gemäß Fig. 4;
- Fig. 6: eine Ansicht der Menüoberfläche gemäß einer weiteren Ausführungsform.

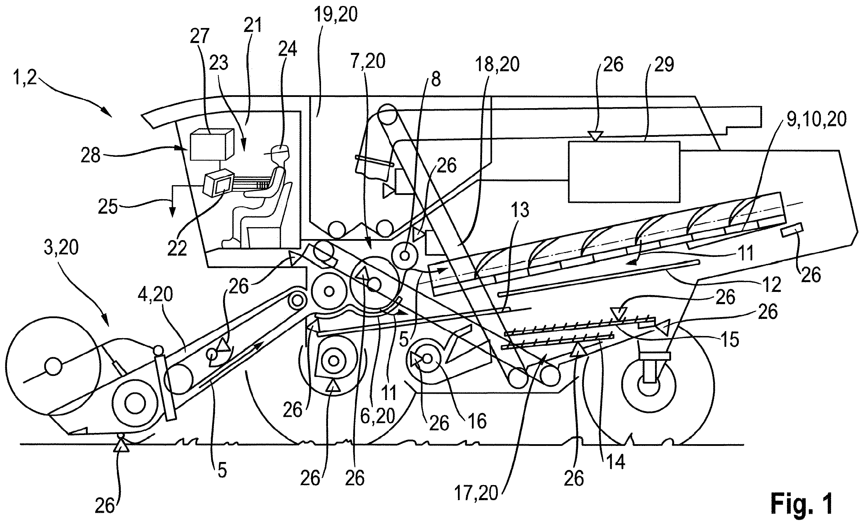

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17und deren Komponenten, die Elevatoren 18 und der Korntank 19 als Arbeitsorgane 20 der landwirtschaftlichen Arbeitsmaschine 1 bezeichnet. Eine als Verbrennungsmotor ausgebildete Antriebseinrichtung 29 dient dazu, die für das Betreiben der Arbeitsorgane 20 sowie eines hydrostatischen Fahrantriebs erforderliche Antriebsleistung bereitzustellen.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder von einer Bedienperson 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert durch ein sogenanntes Bussystem 25 in an sich bekannter Weise mit einer Vielzahl von unterschiedlichen Sensorsystemen 26, um Prozess - und Einstellparameter der jeweiligen Arbeitsorgane 20 und ihrer Komponenten zu erfassen. Einzelheiten bezüglich der Struktur der Sensorsysteme 26 sind detailliert in der DE 101 47 733 A1 beschrieben, auf deren Inhalt hiermit vollumfänglich Bezug genommen wird, so dass im Folgenden die Struktur der Sensorsysteme 26 nicht nochmals beschrieben wird.

Mittels der Sensorsysteme 26 lassen sich unter anderem Qualitätskriterien wie "Durchsatz", "Ausdrusch", "Bruchkornanteil", "Sauberkeit" oder "Strohqualität" bestimmen. Dabei steht das Qualitätskriterium "Durchsatz" den weiteren Qualitätskriterien "Bruchkornanteil" Q1, "Ausdrusch" Q2, "Sauberkeit" Q3 und "Strohqualität" Q4 insoweit konträr gegenüber, als dass ein erhöhter Erfüllungsgrad bei der Erreichung des Qualitätskriteriums "Durchsatz" Q5 aufgrund der hierfür erforderlichen Änderungen der Einstellparameter mit einer Abnahme des Erfüllungsgrades der weiteren Qualitätskriterien einhergeht. Die Aufzählung der vorstehend genannten Qualitätskriterien ist nicht abschließend zu verstehen, da in Abhängigkeit von den Arbeitsorganen 20 weitere Qualitätskriterien durch das Fahrerassistenzsystem 28 auswählbar sind, deren Erfüllungsgrad durch das Bestimmen optimierter Einstellparameter für die Arbeitsorgane 20 eingehalten werden können. Der jeweilige Erfüllungsgrad ist auf Basis der sensorisch ermittelbaren Daten quantifizierbar.

Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten Informationen auch unmittelbar in dem der Steuer- und Regeleinrichtung 23 zugeordneten Anzeigeeinheit 22 erfolgt.

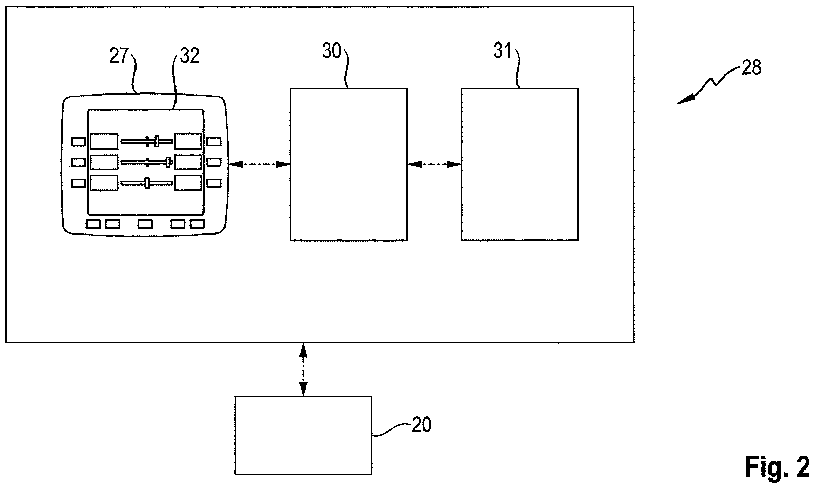

In Fig. 2 ist eine schematische Darstellung des Fahrerassistenzsystems 28 dargestellt. Das Fahrerassistenzsystem 28 umfasst einen Speicher 30 zum Hinterlegen von Daten im informationstechnischen Sinne sowie eine Rechenvorrichtung 31 zur Verarbeitung von in dem Speicher 30 hinterlegten Daten. Das Fahrerassistenzsystem 28 steuert die Arbeitsorgane 20 zur Erreichung der sensorisch erfassbaren Qualitätskriterien eines Arbeitsprozesses des Mähdreschers 2 an. Hierzu werden von dem Fahrerassistenzsystem 28 an den Erfüllungsgrad angepasste Einstellparameter verwendet, die an verschiedene, den Arbeitsorganen 20 zugeordnete Aktoren übermittelt werden, um diese entsprechend einzustellen bzw. zu verstellen.

Durch die Anzeigeeinheit 27 ist ein jeweiliger Erfüllungsgrad des mindestens einen Qualitätskriteriums durch die Bedienperson 24 veränderbar. Die Anzeigeeinheit 27 weist hierzu einen berührungssensitiven Bildschirm 32 auf, der eine grafische Benutzerschnittstelle bildet. Durch den berührungssensitiven Bildschirm 32 sind Berührungsgesten detektierbar, die durch eine Auswertung durch das Fahrerassistenzsystem 28 in korrespondierende Steuerbefehle umgesetzt werden.

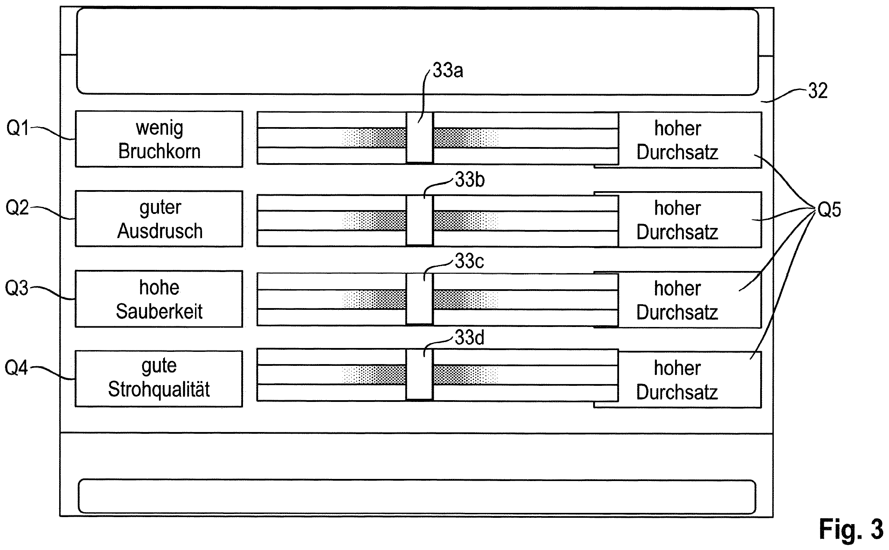

In Fig. 3 ist eine Ansicht einer Menüoberfläche der Anzeigeeinheit 27 dargestellt, die virtuelle Bedienelemente 33a, 33b, 33c, 33d umfasst, die zur Einstellung des Erfüllungsgrades zwischen jeweiligen Qualitätskriterien Q1, Q2, Q3, Q4 und dem hierzu konträren Qualitätskriterium Q5 vorgesehen sind. Die virtuellen Bedienelemente 33a, 33b, 33c, 33d sind in der dargestellten Ausführungsvariante als Schiebsteller ausgebildet. Denkbar ist ebenfalls eine Ausführung der virtuellen Bedienelemente 33a, 33b, 33c, 33d als Drehsteller. Bei einer Inbetriebnahme des Fahrerassistenzsystems 28 befinden sich die virtuellen Bedienelemente 33a, 33b, 33c, 33d in einer initialen Ausgangsstellung, in welcher die virtuellen Bedienelemente 33a, 33b, 33c, 33d eine Mittelstellung zwischen den konträren Qualitätskriterien Q1, Q2, Q3, Q4 und Q5 einnehmen.

Der Erfindung liegt der Gedanke zugrunde, die aufgrund einer Änderung des Erfüllungsgrades zumindest eines Qualitätskriteriums Q1, Q2, Q3, Q4 oder Q5 erwartbaren Auswirkungen auf die anderen Qualitätskriterien Q1, Q2, Q3, Q4 oder Q5 durch das Fahrerassistenzsystem zu bestimmen, die eine Verschlechterung zur Folge haben. Diese zu erwartende Auswirkung ist oder wird für dasjenige Qualitätskriterium oder diejenigen Qualitätskriterien mittels der grafischen Benutzerschnittstelle 32 mit der Änderung des Erfüllungsgrades visuell hervorgeheben, für welches oder welche aufgrund der Änderung des Erfüllungsgrades eine Verschlechterung erwartbar ist.

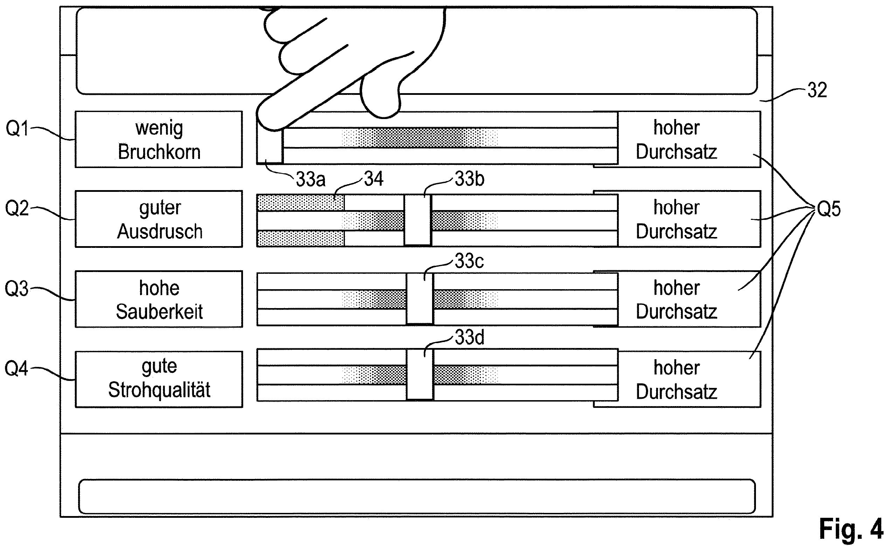

In Fig. 4 ist eine Ansicht der Menüoberfläche der Anzeigeeinheit 27 mit einem in Richtung des Qualitätskriterium Q1 verschobenen Bedienelement 33a dargestellt. Diese Einstellung durch das Bedienelement 33a führt dazu, dass der Ausdruschprozess schonend durchgeführt wird, um den Bruchkornanteil zu minimieren. Das heißt, es wird ein hoher Erfüllungsgrad angestrebt. Der Erfüllungsgrad des dem Qualitätskriterium Q1 gegenüberliegend dargestellten konträren Qualitätsparameters Q5 sinkt zwangsläufig entsprechend. Dabei wirkt sich die Änderung des Erfüllungsgrades des Qualitätskriteriums Q1 nicht nur auf das Qualitätskriterium Q5, das heißt den Durchsatz aus, sondern unmittelbar auch auf das Qualitätskriterium Q2, den Ausdrusch, welcher mit den zur Erreichung des Erfüllungsgrades des Qualitätskriteriums Q1 vorzunehmenden Änderungen der Einstellparameter der Dreschorgane 7 und des Dreschkorbes 6 nicht mehr optimal erfolgen kann. Es kommt zu einer Verschlechterung des Qualitätskriterium Q2. Das Verschieben eines der virtuellen Bedienelemente 33a, 33b, 33c, 33d, hier des Bedienelementes 33a, führt dazu, dass aufgrund der Auswertung der vorliegenden Informationen und Daten des Arbeitsprozesses durch das Fahrerassistenzsystem 28 zu erwarten ist, sich das Qualitätskriterium Q2 verschlechtert. Diese zu erwartende Verschlechterung wird der Bedienperson in Form einer Säule signalisiert, die dem betreffenden virtuellen Bedienelement 33b des sich verschlechternden Qualitätskriteriums Q2 hinterlegt und farblich differenziert dargestellt wird. Die Bedienperson 24 erfährt bereits nahezu gleichzeitig mit der Änderung der Einstellung des Qualitätskriteriums Q1 von den Auswirkungen auf das Qualitätskriteriums Q2, welches sich verschlechtern würde. Im Fall der Ausführung der virtuellen Bedienelemente 33a, 33b, 33c, 33d als Drehsteller kann die zu erwartende Verschlechterung als Kreissektor dargestellt werden, der dem betreffenden virtuellen Bedienelement hinterlegt dargestellt wird.

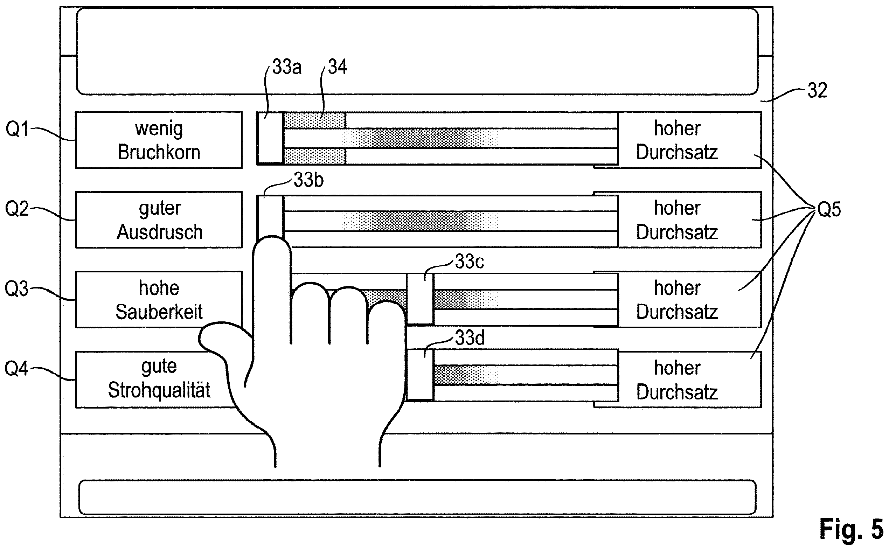

In Fig. 5 ist eine weitere Ansicht der Menüoberfläche gemäß Fig. 4 mit einem weiteren, in Richtung des Qualitätskriterium Q2 verschobenen Bedienelement 33b dargestellt. Das Verschieben des weiteren Bedienelementes 33b zu einem späteren Zeitpunkt führt, in Abhängigkeit von einer Einstellmöglichkeit hinsichtlich einer Priorisierung oder Gleichbehandlung der zuletzt vorgenommenen Änderung an dem Fahrerassistenzsystem 28, zu unterschiedlichen Auswirkungen auf die betreffenden Qualitätskriterien Q1, Q2, Q3, Q4, Q5.

In Fig. 5 ist die Variante dargestellt, gemäß der jeweils die zuletzt vorgenommene Änderung, hier des Erfüllungsgrades des Qualitätskriteriums Q2, Priorität hat. Um den eingestellten Erfüllungsgrad beim Qualitätskriterium Q2 "Ausdrusch" zu erreichen, sind Veränderungen der Einstellparameter an Dreschorganen 7 und Dreschkorb 6 erforderlich, durch welche den mit der vorherigen Einstellung des Qualitätskriteriums Q1 "Bruchkorn" vorgenommenen Änderungen derselben Einstellparameter zuwider laufen. Es käme bei einer Übernahme der neuen Einstellung des Erfüllungsgrades für das Qualitätskriterium Q2 zu einer Verschlechterung des Qualitätskriteriums Q1, da der Anteil an Bruchkorn zunehmen würde. Diese Verschlechterung wird entsprechend durch die dem Bedienelement 33a hinterlegte Säule 34 visualisiert. Die Einblendung der Säule 34 kann dabei gegenläufig zu der Betätigungsrichtung des Bedienelementes 33a erfolgen, ohne die Position des Bedienelements 33a des betroffenen Qualitätskriteriums Q1 zu verändern.

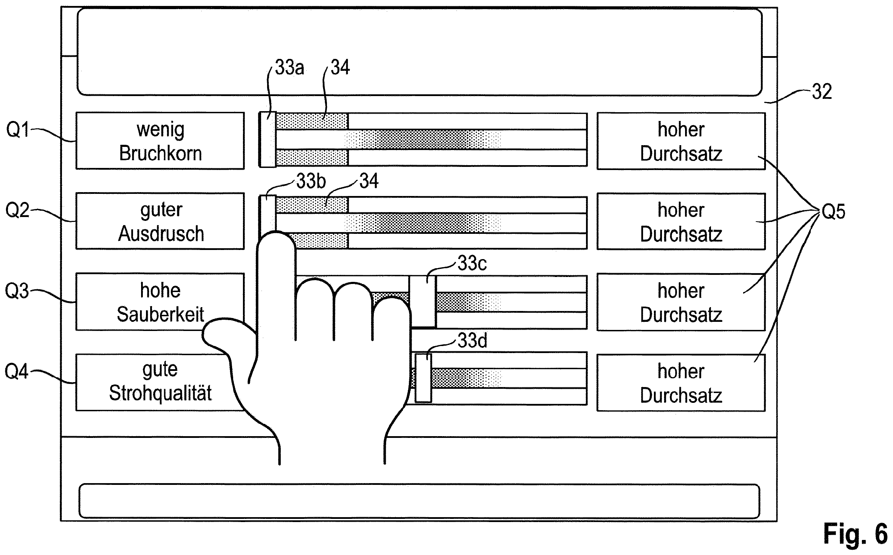

In Fig. 6 ist eine Ansicht der Menüoberfläche gemäß Fig. 5 dargestellt, bei welcher die nachfolgende Änderung des Erfüllungsgrades des weiteren Qualitätskriteriums Q2 gleichwertig mit der vorangegangen Veränderung des Erfüllungsgrades des Qualitätskriteriums Q1 gehandhabt wird. Bei einer Gleichbehandlung der Qualitätskriterien Q1 und Q2 durch das Fahrerassistenzsystem 28 werden Einstellparameter der Arbeitsorgane 20 bestimmt, die einen Kompromiss zwischen der Erreichung der Erfüllungsgrade der beiden Qualitätskriterien Q1 und Q2 darstellen. Da dieser Kompromiss zu einer zu erwartenden Verschlechterung beider Qualitätskriterien Q1, Q2 führen würde, werden den beiden Bedienelementen 33a und 33b hinterlegte Säulen 34 dargestellt, um die Bedienperson 24 über die zu erwartende Verschlechterung hinsichtlich des angestrebten Erfüllungsgrades beider Qualitätskriterien Q1, Q2 in Kenntnis zu setzen. Mittels dieser visuellen Entscheidungshilfe kann die Bedienperson 24 darüber entscheiden, ob sie die von ihr gewählten Einstellungen übernimmt oder modifiziert, um gegebenenfalls zu einem besseren Gesamtarbeitsergebnis des Arbeitsprozesses zu gelangen.

**Bezugszeichenliste**

| | | | |
|---|---|---|---|
| 1 | Arbeitsmaschine | 31 | Rechenvorrichtung |
| 2 | Mähdrescher | 32 | Benutzerschnittstelle |
| 3 | Getreideschneidwerk | 33a | Virtuelles Bedienelement |
| 4 | Schrägförderer | 33b | Virtuelles Bedienelement |
| 5 | Erntegutstrom | 33c | Virtuelles Bedienelement |
| 6 | Dreschkorb | 33d | Virtuelles Bedienelement |
| 7 | Dreschorgan | 34 | Säule |
| 8 | Umlenktrommel | | |
| 9 | Trennrotor | Q1 | Qualitätskriterium |
| 10 | Trenneinrichtung | Q2 | Qualitätskriterium |
| 11 | Körner | Q3 | Qualitätskriterium |
| 12 | Rücklaufboden | Q4 | Qualitätskriterium |
| 13 | Zuführboden | Q5 | Qualitätskriterium |
| 14 | Siebebene | | |
| 15 | Siebebene | | |
| 16 | Gebläse | | |
| 17 | Reinigungseinrichtung | | |
| 18 | Elevator | | |
| 19 | Korntank | | |
| 20 | Arbeitsorgan | | |
| 21 | Fahrzeugkabine | | |
| 22 | Anzeigeeinheit | | |
| 23 | Steuer- und Regeleinrichtung | | |
| 24 | Bediener | | |
| 25 | Bussystem | | |
| 26 | Sensorsystem | | |
| 27 | Anzeigeeinheit | | |
| 28 | Fahrerassistenzsystem | | |
| 29 | Antriebseinrichtung | | |
| 30 | Speicher | | |

## Patentansprüche

1. Landwirtschaftliche Arbeitsmaschine (1, 2) zur Abarbeitung eines landwirtschaftlichen Arbeitsprozesses, mit mehreren Arbeitsorganen (20) und mit einem Fahrerassistenzsystem (28) zur Ansteuerung der Arbeitsorgane (20) zur Erreichung mindestens eines sensorisch erfassbaren Qualitätskriteriums (Q1, Q2, Q3, Q4, Q5) des Arbeitsprozesses, wobei die landwirtschaftliche Arbeitsmaschine (1, 2) eine mit einer Anzeigeneinheit (22) versehene Steuer- und Regeleinrichtung (23) umfasst, welche durch ein sogenanntes Bussystem (25) in an sich bekannter Weise mit einer Vielzahl von unterschiedlichen Sensorsystemen (26) kommuniziert und die Sensorsysteme (26) eingerichtet sind die Qualitätskriterien zu bestimmen, wobei die Qualitätskriterien "Durchsatz", "Ausdrusch", "Bruchkornanteil", "Sauberkeit" und "Strohqualität" sind, wobei durch das Fahrerassistenzsystem (20) spezifische Einstellparameter zur Ansteuerung der Arbeitsorgane (20) voreinstellbar sind, um das mindestens eine Qualitätskriterium (Q1, Q2, Q3, Q4, Q5) des Arbeitsprozesses zu erfüllen, wobei das Fahrerassistenzsystem (28) einen Speicher (30) zum Hinterlegen von Daten und eine Recheneinrichtung (31) zur Verarbeitung der in dem Speicher (30) hinterlegten Daten umfasst, wobei das Fahrerassistenzsystem (28) eine grafische Benutzerschnittstelle (32) aufweist, durch die ein jeweiliger Erfüllungsgrad des mindestens einen Qualitätskriteriums (Q1, Q2, Q3, Q4, Q5) veränderbar ist, **dadurch gekennzeichnet, dass** das Fahrerassistenzsystem (28) und die grafische Benutzerschnittstelle (32) derart eingerichtet sind, aufgrund einer Änderung des Erfüllungsgrades des zumindest einen Qualitätskriteriums (Q1, Q2, Q3, Q4, Q5) erwartbare Auswirkungen auf andere Qualitätskriterien (Q1, Q2, Q3, Q4, Q5) durch das Fahrerassistenzsystem (28) bestimmbar sind und dass mittels der grafischen Benutzerschnittstelle (32) mit der Änderung des Erfüllungsgrades dasjenige Qualitätskriterium (Q2) oder diejenigen Qualitätskriterien (Q1, Q2) visuell hervorhebbar ist oder sind, für welches oder welche aufgrund der Änderung des Erfüllungsgrades eine Verschlechterung erwartbar ist.

2. Landwirtschaftliche Arbeitsmaschine (1, 2) nach Anspruch 1, **dadurch gekennzeichnet, dass** die Vorgabe und die Änderung des jeweiligen Erfüllungsgrades mittels zumindest eines virtuellen Bedienelementes (33a, 33b, 33c, 33d) der grafischen Benutzerschnittstelle (32) visualisierbar und veränderbar sind.

3. Landwirtschaftliche Arbeitsmaschine (1, 2) nach Anspruch 1 oder 2, **dadurch gekennzeichnet, dass** die jeweils aktuell vorgenommene Veränderung des Erfüllungsgrades eines Qualitätskriteriums (Q1, Q2, Q3, Q4, Q5) gegenüber einer vorherigen Veränderung des Erfüllungsgrades eines anderen Qualitätskriteriums (Q1, Q2, Q3, Q4, Q5) priorisierbar ist.

4. Landwirtschaftliche Arbeitsmaschine (1, 2) nach Anspruch 1 oder 2, **dadurch gekennzeichnet, dass** die jeweils aktuell vorgenommene Veränderung des Erfüllungsgrades eines Qualitätskriteriums (Q1, Q2, Q3, Q4, Q5) gegenüber einer vorherigen Veränderung des Erfüllungsgrades eines anderen Qualitätskriteriums (Q1, Q2, Q3, Q4, Q5) gleichwertig berücksichtigbar ist.

5. Landwirtschaftliche Arbeitsmaschine (1, 2) nach einem der vorangehenden Ansprüche, **dadurch gekennzeichnet, dass** das Fahrerassistenzsystem (28) dazu eingerichtet ist, die erwartbare Änderung des Erfüllungsgrades des Qualitätskriteriums oder der Qualitätskriterien (Q1, Q2, Q3, Q4, Q5) unabhängig von einer Durchführung der Änderung des Erfüllungsgrades des zumindest einen Qualitätskriteriums (Q1, Q2, Q3, Q4, Q5) zu bestimmen.

6. Landwirtschaftliche Arbeitsmaschine (1, 2) nach Anspruch 5, **dadurch gekennzeichnet, dass** die erwartbare Änderung des Erfüllungsgrades des Qualitätskriteriums oder der Qualitätskriterien (Q1, Q2, Q3, Q4, Q5) auf Grundlage von in dem Fahrerassistenzsystem (28) hinterlegten Informationen bestimmbar ist.

7. Landwirtschaftliche Arbeitsmaschine (1, 2) nach Anspruch 2 bis 6, **dadurch gekennzeichnet, dass** das virtuelle Bedienelement (33a, 33b, 33c, 33d) mittels der grafischen Benutzerschnittstellte (32) als virtueller Schiebesteller oder virtueller Drehsteller darstellbar ist.

8. Landwirtschaftliche Arbeitsmaschine (1, 2) nach einem der vorangehenden Ansprüche, **dadurch gekennzeichnet, dass** ein durch das Fahrerassistenzsystem (28) bestimmter erwartbarer Grad der Veränderung des oder der sich verschlechternden Qualitätskriterien (Q1, Q2, Q3, Q4, Q5) durch eine der Verstellrichtung des betätigten virtuellen Bedienelementes (33a, 33b, 33c, 33d) gegenläufige Visualisierung darstellbar ist.

9. Landwirtschaftliche Arbeitsmaschine (1, 2) nach Anspruch 8, **dadurch gekennzeichnet, dass** die Visualisierung des erwartbaren Grades der Veränderung des oder der sich verschlechternden Qualitätskriterien (Q1, Q2, Q3, Q4, Q5) mittels der Darstellung einer Säule (24) oder eines Kreissektors erfolgt, die dem jeweiligen virtuellen Bedienelement (33a, 33b, 33c, 33d) des oder der sich verschlechternden Qualitätskriterien (Q1, Q2, Q3, Q4, Q5) hinterlegt darstellbar ist oder sind.

10. Landwirtschaftliche Arbeitsmaschine (1, 2) nach einem der vorangehenden Ansprüche, **dadurch gekennzeichnet, dass** Qualitätskriterien (Q1, Q2, Q3, Q4, Q5) "Bruchkornanteil", "Ausdrusch", "Sauberkeit", "Strohqualität" sowie "Durchsatz" sind, wobei die Qualitätskriterien (Q1, Q2, Q3, Q4) "Bruchkornanteil", "Ausdrusch", "Sauberkeit", "Strohqualität" jeweils dem konträren Qualitätskriterium (Q5) "Durchsatz" gegenübergestellt durch die grafischen Benutzerschnittstelle (32) darstellbar sind.

11. Landwirtschaftliche Arbeitsmaschine (1, 2) nach Anspruch 10, **dadurch gekennzeichnet, dass** die virtuellen Bedienelemente des jeweiligen Qualitätskriteriums (Q1, Q2, Q3, Q4, Q5) bei einer Inbetriebnahme des Fahrerassistenzsystems (28) als initiale Ausgangsstellung eine Mittelstellung zwischen den konträren Qualitätskriterien (Q1, Q2, Q3, Q4, Q5) aufweisen.

12. Landwirtschaftliche Arbeitsmaschine (1, 2) nach einem der vorangehenden Ansprüche, **dadurch gekennzeichnet, dass** die Arbeitsmaschine (1) als Mähdrescher (2) ausgeführt ist.

13. Verfahren zum Betreiben einer landwirtschaftliche Arbeitsmaschine (1, 2) zur Abarbeitung eines landwirtschaftlichen Arbeitsprozesses, mit mehreren Arbeitsorganen (20) und mit einem Fahrerassistenzsystem (28) zur Ansteuerung der Arbeitsorgane (20) zur Erreichung mindestens eines sensorisch erfassbaren Qualitätskriteriums (Q1, Q2, Q3, Q4, Q5) des Arbeitsprozesses, wobei die landwirtschaftliche Arbeitsmaschine (1, 2) eine mit einer Anzeigeneinheit (22) versehene Steuer- und Regeleinrichtung (23) umfasst, welche durch ein sogenanntes Bussystem (25) in an sich bekannter Weise mit einer Vielzahl von unterschiedlichen Sensorsystemen (26) kommuniziert und die Sensorsysteme (26) eingerichtet sind die Qualitätskriterien zu bestimmen, wobei die Qualitätskriterien "Durchsatz", "Ausdrusch", "Bruchkornanteil", "Sauberkeit" und "Strohqualität" sind, wobei durch das Fahrerassistenzsystem (28) spezifische Einstellparameter zur Ansteuerung der Arbeitsorgane (20) voreingestellt werden, um das mindestens eine Qualitätskriterium (Q1, Q2, Q3, Q4, Q5) des Arbeitsprozesses zu erfüllen, wobei das Fahrerassistenzsystem (28) einen Speicher (30) zum Hinterlegen von Daten und eine Recheneinrichtung (31) zur Verarbeitung der in dem Speicher (30) hinterlegten Daten umfasst, wobei das Fahrerassistenzsystem (28) eine grafische Benutzerschnittstelle (32) aufweist, durch die ein jeweiliger Erfüllungsgrad des mindestens einen Qualitätskriteriums (Q1, Q2, Q3, Q4, Q5) durch eine Eingabe verändert wird, **dadurch gekennzeichnet, dass** aufgrund einer Änderung des Erfüllungsgrades des zumindest einen Qualitätskriteriums (Q1, Q2, Q3, Q4, Q5) erwartbare Auswirkungen auf andere Qualitätskriterien (Q1, Q2, Q3, Q4, Q5) durch das Fahrerassistenzsystem (28) bestimmt werden und dass mittels der grafischen Benutzerschnittstelle (32) mit der Änderung des Erfüllungsgrades dasjenige Qualitätskriterium oder diejenigen Qualitätskriterien (Q1, Q2, Q3, Q4, Q5) visuell hervorgehoben wird oder werden, für welches oder welche aufgrund der Änderung des Erfüllungsgrades eine Verschlechterung erwartet wird.

## Claims

1. An agricultural working machine (1, 2) for executing an agricultural operating procedure, with a plurality of working units (20) and with a driver assistance system (28) for controlling the working units (20) in order to fulfil at least one sensor-detectable quality criterion (Q1, Q2, Q3, Q4, Q5) of the operating procedure, wherein the agricultural working machine (1, 2) comprises a controlling and regulating device (23) provided with a display unit (22), which communicates with a plurality of different sensor systems (26) in a manner which is known per se by means of what is known as a bus system (25) and the sensor systems (26) are configured to determine the quality criteria, wherein the quality criteria are "Throughput", "Threshing", "Broken grain portion", "Cleanliness" and "Straw quality", wherein by means of the driver assistance system (20), specific setting parameters for controlling the working units (20) can be preset in order to satisfy the at least one quality criterion (Q1, Q2, Q3, Q4, Q5) of the operating procedure, wherein the driver assistance system (28) comprises a memory (30) for storing data and a computing device (31) for processing the data stored in the memory (30), wherein the driver assistance system (28) has a graphical user interface (32) by means of which a respective degree of fulfilment of the at least one quality criterion (Q1, Q2, Q3, Q4, Q5) can be changed, **characterized in that** the driver assistance system (28) and the graphical user interface (32) are configured such that, on the basis of a change to the degree of fulfilment of the at least one quality criterion (Q1, Q2, Q3, Q4, Q5), effects on other quality criteria (Q1, Q2, Q3, Q4, Q5) which can be expected can be determined by the driver assistance system (28) and **in that** with the change in the degree of fulfilment, that quality criterion (Q2) or those quality criteria (Q1, Q2) for which a deterioration is expected on the basis of a change to the degree of fulfilment is or are visually highlighted by means of the graphical user interface (32).

2. The agricultural working machine (1, 2) according to claim 1, **characterized in that** the specification of and the change to the respective degree of fulfilment can be visualised and changed by means of at least one virtual operating element (33a, 33b, 33c, 33d) of the graphical user interface (32).

3. The agricultural working machine (1, 2) according to claim 1 or claim 2, **characterized in that** the respective currently undertaken change to the degree of fulfilment of a quality criterion (Q1, Q2, Q3, Q4, Q5) can be prioritized over a previous change to the degree of fulfilment of another quality criterion (Q1, Q2, Q3, Q4, Q5).

4. The agricultural working machine (1, 2) according to claim 1 or claim 2, **characterized in that** the respective currently undertaken change to the degree of fulfilment of a quality criterion (Q1, Q2, Q3, Q4, Q5) can be taken account of equivalently to a previous change to the degree of fulfilment of another quality criterion (Q1, Q2, Q3, Q4, Q5).

5. The agricultural working machine (1, 2) according to one of the preceding claims, **characterized in that** the driver assistance system (28) is configured to determine the expected change to the degree of fulfilment of the quality criterion or the quality criteria (Q1, Q2, Q3, Q4, Q5) independently of an implementation of the change to the degree of fulfilment of the at least one quality criterion (Q1, Q2, Q3, Q4, Q5).

6. The agricultural working machine (1, 2) according to claim 5, **characterized in that** the expected change to the degree of fulfilment of the quality criterion or the quality criteria (Q1, Q2, Q3, Q4, Q5) can be determined on the basis of information stored in the driver assistance system (28).

7. The agricultural working machine (1, 2) according to claims 2 to 6, **characterized in that** the virtual operating element (33a, 33b, 33c, 33d) can be represented by means of the graphical user interface (32) as a virtual slider or virtual dial.

8. The agricultural working machine (1, 2) according to one of the preceding claims, **characterized in that** an expected degree of change to the deteriorated quality criterion or quality criteria (Q1, Q2, Q3, Q4, Q5) determined by the driver assistance system (28) can be represented by a visualisation which is opposite to the direction of displacement of the actuated virtual operating element (33a, 33b, 33c, 33d).

9. The agricultural working machine (1, 2) according to claim 8, **characterized in that** the visualisation of the expected degree of change to the deteriorating quality criterion or quality criteria (Q1, Q2, Q3, Q4, Q5) is carried out by means of a representation of a column (24) or a circular segment which can be displayed behind the respective virtual operating element (33a, 33b, 33c, 33d) for the deteriorating quality criterion or quality criteria (Q1, Q2, Q3, Q4, Q5).

10. The agricultural working machine (1, 2) according to one of the preceding claims, **characterized in that** the quality criteria (Q1, Q2, Q3, Q4, Q5) are "Broken grain portion", "Threshing", "Cleanliness", "Straw quality" as well as "Throughput", wherein the "Broken grain portion", "Threshing", "Cleanliness" and "Straw quality" quality criteria (Q1, Q2, Q3, Q4) can each be displayed opposite to the contrasting quality criterion (Q5) of "Throughput" by means of the graphical user interface (32).

11. The agricultural working machine (1, 2) according to claim 10, **characterized in that** upon start-up of the driver assistance system (28), the virtual operating elements of the respective quality criterion (Q1, Q2, Q3, Q4, Q5) take up a central position between the contrasting quality criteria (Q1, Q2, Q3, Q4, Q5) as an initial starting position.

12. The agricultural working machine (1, 2) according to one of the preceding claims, **characterized in that** the working machine (1) is configured as a combine harvester (2).

13. A method for operating an agricultural working machine (1, 2) for executing an agricultural operating procedure, with a plurality of working units (20) and with a driver assistance system (28) for controlling the working units (20) in order to fulfil at least one sensor-detectable quality criterion (Q1, Q2, Q3, Q4, Q5) of the operating procedure, wherein the agricultural working machine (1, 2) comprises a controlling and regulating device (23) provided with a display unit (22), which communicates with a plurality of different sensor systems (26) in a manner which is known per se by means of what is known as a bus system (25) and the sensor systems (26) are configured to determine the quality criteria, wherein the quality criteria are "Throughput", "Threshing", "Broken grain portion", "Cleanliness" and "Straw quality", wherein by means of the driver assistance system (28), specific setting parameters for controlling the working units (20) can be preset in order to satisfy the at least one quality criterion (Q1, Q2, Q3, Q4, Q5) of the operating procedure, wherein the driver assistance system (28) comprises a memory (30) for storing data and a computing device (31) for processing the data stored in the memory (30), wherein the driver assistance system (28) has a graphical user interface (32) through which a respective degree of fulfilment of the at least one quality criterion (Q1, Q2, Q3, Q4, Q5) is changed via an input, **characterized in that** on the basis of a change in the degree of fulfilment of the at least one quality criterion (Q1, Q2, Q3, Q4, Q5), effects on other quality criteria (Q1, Q2, Q3, Q4, Q5) which can be expected are determined by the driver assistance system (28), and **in that** with the change in the degree of fulfilment, that quality criterion or those quality criteria (Q1, Q2, Q3, Q4, Q5) for which a deterioration is expected on the basis of the change to the degree of fulfilment is or are visually highlighted by means of the graphical user interface (32).

## Revendications

1. Machine de travail agricole (1, 2) pour exécuter un processus de travail agricole, comprenant plusieurs organes de travail (20) et comprenant un système d'assistance à la conduite (28) pour commander les organes de travail (20) afin d'atteindre au moins un critère de qualité détectable par capteurs (Q1, Q2, Q3, Q4, Q5) du processus de travail, la machine de travail agricole (1, 2) incluant un équipement de commande et de régulation (23) qui est muni d'une unité d'affichage (22) et qui, par l'intermédiaire d'un « système de bus » (25), communique d'une manière connue en soi avec une pluralité de systèmes de capteur différents (26) et les systèmes de capteur (26) étant agencés pour déterminer les critères de qualité, les critères de qualité étant « débit », « battage », « proportion de grains cassés », « propreté » et « qualité de paille », le système d'assistance à la conduite (20) permettant de prérégler des paramètres de réglage spécifiques pour commander les organes de travail (20) afin de respecter le au moins un critère de qualité (Q1, Q2, Q3, Q4, Q5) du processus de travail, le système d'assistance à la conduite (28) incluant une mémoire (30) pour enregistrer des données et un équipement de calcul (31) pour traiter les données enregistrées dans la mémoire (30), le système d'assistance à la conduite (28) comportant une interface utilisateur graphique (32) par l'intermédiaire de laquelle un degré de respect respectif du au moins un critère de qualité (Q1, Q2, Q3, Q4, Q5) est modifiable, **caractérisée en ce que** le système d'assistance à la conduite (28) et l'interface utilisateur graphique (32) sont agencés de façon que des effets prévisibles à la suite d'une modification du degré de respect du au moins un critère de qualité (Q1, Q2, Q3, Q4, Q5) sur d'autres critères de qualité (Q1, Q2, Q3, Q4, Q5) peuvent être déterminés par l'intermédiaire du système d'assistance à la conduite (28), et **en ce que**, avec la modification du degré de respect, l'interface utilisateur graphique (32) permet de mettre en évidence visuellement le critère de qualité (Q2) ou les critères de qualité (Q1, Q2) pour lequel ou lesquels une dégradation est prévisible en raison de la modification du degré de respect.

2. Machine de travail agricole (1, 2) selon la revendication 1, **caractérisée en ce que** la prescription et la modification du degré de respect respectif sont visualisables et modifiables au moyen d'au moins un élément d'utilisation virtuel (33a, 33b, 33c, 33d) de l'interface utilisateur graphique (32).

3. Machine de travail agricole (1, 2) selon la revendication 1 ou 2, **caractérisée en ce que** la modification respectivement entreprise instantanément du degré de respect d'un critère de qualité (Q1, Q2, Q3, Q4, Q5) est priorisable par rapport à une modification antérieure du degré de respect d'un autre critère de qualité (Q1, Q2, Q3, Q4, Q5).

4. Machine de travail agricole (1, 2) selon la revendication 1 ou 2, **caractérisée en ce que** la modification respectivement entreprise instantanément du degré de respect d'un critère de qualité (Q1, Q2, Q3, Q4, Q5) peut être prise en compte de manière équivalente à une modification antérieure du degré de respect d'un autre critère de qualité (Q1, Q2, Q3, Q4, Q5).

5. Machine de travail agricole (1, 2) selon une des revendications précédentes, **caractérisée en ce que** le système d'assistance à la conduite (28) est agencé pour déterminer la modification prévisible du degré de respect du critère de qualité ou des critères de qualité (Q1, Q2, Q3, Q4, Q5) indépendamment d'une réalisation de la modification du degré de respect du au moins un critère de qualité (Q1, Q2, Q3, Q4, Q5).

6. Machine de travail agricole (1, 2) selon la revendication 5, **caractérisée en ce que** la modification prévisible du degré de respect du critère de qualité ou des critères de qualité (Q1, Q2, Q3, Q4, Q5) est déterminable sur la base d'informations enregistrées dans le système d'assistance à la conduite (28).

7. Machine de travail agricole (1, 2) selon la revendication 2 à 6, **caractérisée en ce que** l'élément d'utilisation virtuel (33a, 33b, 33c, 33d) est affichable sous la forme d'un actionneur à curseurs virtuel ou d'un actionneur rotatif virtuel au moyen de l'interface utilisateur graphique (32).

8. Machine de travail agricole (1, 2) selon une des revendications précédentes, **caractérisée en ce qu'**un degré prévisible, déterminé par l'intermédiaire du système d'assistance à la conduite (28), de modification du ou des critères de qualité dégradés (Q1, Q2, Q3, Q4, Q5) est affichable par l'intermédiaire d'une visualisation en sens opposé à la direction de réglage de l'élément d'utilisation virtuel actionné (33a, 33b, 33c, 33d).

9. Machine de travail agricole (1, 2) selon la revendication 8, **caractérisée en ce que** la visualisation du degré prévisible de modification du ou des critères de qualité dégradés (Q1, Q2, Q3, Q4, Q5) s'effectue au moyen de la représentation d'une colonne (24) ou d'un secteur de cercle qui est ou sont représentables de manière enregistrée sur l'élément d'utilisation virtuel respectif (33a, 33b, 33c, 33d) du ou des critères de qualité dégradés (Q1, Q2, Q3, Q4, Q5).

10. Machine de travail agricole (1, 2) selon une des revendications précédentes, **caractérisée en ce que** des critères de qualité (Q1, Q2, Q3, Q4, Q5) sont « proportion de grains cassés », « battage », « propreté », « qualité de paille » ainsi que « débit », les critères de qualité (Q1, Q2, Q3, Q4) « proportion de grains cassés », « battage », « propreté », « qualité de paille » étant affichables en regard respectivement du critère de qualité contraire (Q5) « débit » par l'intermédiaire de l'interface utilisateur graphique (32).

11. Machine de travail agricole (1, 2) selon la revendication 10, **caractérisée en ce que**, à la mise en service du système d'assistance à la conduite (28), les éléments d'utilisation virtuels du critère de qualité respectif (Q1, Q2, Q3, Q4, Q5) présentent, comme position de départ initiale, une position médiane entre les critères de qualité contraires (Q1, Q2, Q3, Q4, Q5).

12. Machine de travail agricole (1, 2) selon une des revendications précédentes, **caractérisée en ce que** la machine de travail (1) est conçue sous la forme d'une moissonneuse-batteuse (2).

13. Procédé d'exploitation d'une machine de travail agricole (1, 2) pour exécuter un processus de travail agricole, comprenant plusieurs organes de travail (20) et comprenant un système d'assistance à la conduite (28) pour commander les organes de travail (20) afin d'atteindre au moins un critère de qualité détectable par capteurs (Q1, Q2, Q3, Q4, Q5) du processus de travail, la machine de travail agricole (1, 2) incluant un équipement de commande et de régulation (23) qui est muni d'une unité d'affichage (22) et qui, par l'intermédiaire d'un « système de bus » (25), communique d'une manière connue en soi avec une pluralité de systèmes de capteur différents (26) et les systèmes de capteur (26) étant agencés pour déterminer les critères de qualité, les critères de qualité étant « débit », « battage », « proportion de grains cassés », « propreté » et « qualité de paille », le système d'assistance à la conduite (20) permettant de prérégler des paramètres de réglage spécifiques pour commander les organes de travail (20) afin de respecter le au moins un critère de qualité (Q1, Q2, Q3, Q4, Q5) du processus de travail, le système d'assistance à la conduite (28) incluant une mémoire (30) pour enregistrer des données et un équipement de calcul (31) pour traiter les données enregistrées dans la mémoire (30), le système d'assistance à la conduite (28) comportant une interface utilisateur graphique (32) par l'intermédiaire de laquelle un degré de respect respectif du au moins un critère de qualité (Q1, Q2, Q3, Q4, Q5) est modifié par l'intermédiaire d'une entrée, **caractérisé en ce que** des effets prévisibles à la suite d'une modification du degré de respect du au moins un critère de qualité (Q1, Q2, Q3, Q4, Q5) sur d'autres critères de qualité (Q1, Q2, Q3, Q4, Q5) sont déterminés par l'intermédiaire du système d'assistance à la conduite (28) et **en ce que**, avec la modification du degré de respect, l'interface utilisateur graphique (32) permet de mettre en évidence visuellement le critère de qualité ou les critères de qualité (Q1, Q2, Q3, Q4, Q5) pour lequel ou lesquels une dégradation est prévisible en raison de la modification du degré de respect.
